Europäisches Patentamt

**European Patent Office**

**Office européen des brevets**

(11) Numéro de publication: **0 509 854 B1**

## FASCICULE DE BREVET EUROPEEN

(45) Date de publication de fascicule du brevet: **28.06.95** (51) Int. Cl.⁶: **B32B 15/01**

(21) Numéro de dépôt: **92400623.2**

(22) Date de dépôt: **10.03.92**

---

(54) **Procédé de réalisation de tôles plaquées tricouches résistant à l'abrasion et tôles plaquées obtenues.**

---

(30) Priorité: **19.04.91 FR 9104887**

(43) Date de publication de la demande:
**21.10.92 Bulletin 92/43**

(45) Mention de la délivrance du brevet:
**28.06.95 Bulletin 95/26**

(84) Etats contractants désignés:
**BE DE FR IT**

(56) Documents cités:
**BE-A- 881 593**
**DE-A- 2 309 871**
**DE-C- 2 921 854**
**US-A- 3 510 367**

(73) Titulaire: **CREUSOT-LOIRE INDUSTRIE**
**Immeuble Ile-de-France**
**4 Place de la Pyramide**
**La Défence 9**
**F-92800 Puteaux (FR)**

(72) Inventeur: **Beguinot, Jean**
**77 rue du Dr. Robillard**
**F-71200 Le Creusot (FR)**
Inventeur: **Brisson, Jean-Georges**
**20 rue Lamartine**
**F-71200 Le Creusot (FR)**
Inventeur: **Dor, Philippe**
**20 Résidence des bords du Lac -Torcy**
**F-71210 Montchanin (FR)**

(74) Mandataire: **Bouget, Lucien et al**
**Cabinet Lavoix**
**2, Place d'Estienne d'Orves**
**F-75441 Paris Cédex 09 (FR)**

---

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

**Description**

L'invention est relative à un procédé de réalisation de tôles plaquées tricouches à haute résistance à l'usure et à bonne planéité utilisées notamment pour fabriquer des pièces tolérancées, c'est-à-dire dont certaines dimensions doivent rester entre des limites bien définies.

Le plus souvent, les équipements soumis à des phénomènes d'abrasion sont utilisés jusqu'à usure complète de certaines pièces ; ces pièces sont alors changées. Dans certaines applications cependant, les pièces soumises à l'usure doivent respecter certaines tolérances dimensionnelles ; c'est le cas par exemple des moules à parpaings en béton. Pour ces applications, les pièces sont changées avant usure totale, il n'est donc pas utile qu'elles soient très résistantes à l'abrasion sur toute leur épaisseur, par contre elles doivent être très résistantes à l'usure sur chacune de leurs faces et sur une certaine profondeur.

Pour réaliser ces pièces, plusieurs techniques existent qui présentent chacune des inconvénients. On peut réaliser ces pièces en un acier résistant à l'abrasion dans toute sa masse, mais un tel acier est en général fragile et peu soudable ; il est d'autant plus fragile et peu soudable que sa résistance à l'abrasion est élevée.

On peut aussi, et c'est ce qui est fait couramment pour les moules à parpaings, réaliser les pièces en un acier de cémentation ou de carbonitruration facile à mettre en oeuvre, puis cémenter ou carbonitrurer les ensembles ainsi obtenus. Cette technique présente trois inconvénients :
- elle est coûteuse,
- elle n'est pas très commode pour les ensembles de grande dimension,
- elle induit des déformations parfois inacceptables.

On peut enfin utiliser des tôles plaquées tricouches composées d'une couche interne relativement ductile et soudable et de deux couches externes résistant à l'usure. Deux techniques existent qui présentent chacune des inconvénients :
- on peut obtenir ces tôles par normalisation, mais pour des raisons de coût d'éléments d'alliage et de niveau de ténacité, la dureté maximale obtenue est limitée à environ 400 HB en pratique, ce qui conduit à une résistance à l'usure relativement modérée. (Sauf pour les épaisseurs minces pour lesquelles on peut envisager une trempe à l'air),
- on peut obtenir ces tôles par trempe à l'eau en utilisant pour les couches externes un acier à forte teneur en carbone, on obtient ainsi de très hautes duretés et une bonne résistance à l'abrasion, mais ces tôles ne sont pas planes et ce, d'autant moins que la tenue à l'abrasion est élevée ; ce manque de planéité est très gênant pour la réalisation de pièces tolérancées. Le planage ultérieur des tôles risque d'aboutir à des fissurations importantes et de toutes façons génère des contraintes internes inacceptables en service.

Le but de la présente invention est de proposer un procédé de réalisation de tôles plaquées tricouches à très haute résistance à l'abrasion, bien planes et aptes à réaliser des pièces tolérancées.

L'objet de la présente invention est un procédé de réalisation de tôles plaquées tricouches à haute résistance à l'usure et à bonne planéité utilisées notamment pour fabriquer des pièces tolérancées, dans lequel :
- on réalise par placage de tôles en position superposée une tôle composite tricouche dont la couche centrale est constituée d'un acier faiblement allié ayant une teneur pondérale en carbone inférieure à 0,25 % et un carbone équivalent inférieur à 0,5 %, et dont les couches externes sont constituées d'un acier contenant au moins 0,3 % de carbone et au moins 1 % d'éléments carburigènes,
- on effectue une trempe telle que le refroidissement soit très rapide au-dessus du points $M_s$ des couches externes et beaucoup plus lent ensuite.

Le carbone équivalent dans l'acier de la couche centrale est déterminé par la relation suivante :

$$C_{eq} = C + \frac{Mn}{6} + \frac{Cr + Mo}{5} + \frac{Ni + Cu + V}{15}$$

Le carbone équivalent qui doit être inférieur à 0,5% est, de manière préférentielle, inférieur à 0,25%. La teneur en carbone qui doit être inférieure à 0,25 % est, de manière préférentielle, inférieure à 0,15 %.

L'acier de la couche centrale ainsi défini présente une bonne soudabilité.

De préférence, les éléments carburigènes des couches externes sont principalement constitués par du chrome et du molybdène, et la somme des teneurs pondérales en chrome et molybdène Cr + Mo est de préférence supérieure à 1 %.

La trempe est une trempe à l'air ou préférentiellement une trempe à l'huile. Dans ce dernier cas cette trempe est faite de préférence dans une machine de trempe sous presse.

La teneur en carbone et en éléments d'alliage des couches externes est suffisante pour qu'on obtienne après trempe une structure en grande partie martensitique et une dureté Brinell supérieure à 450 HB et de préférence supérieure à 600 HB.

L'invention est également relative à une tôle plaquée tricouche réalisée à l'aide du procédé objet de l'invention ; dans cette tôle, la structure des couches externes est de la martensite avec une fine précipitation de carbures. La dureté des couches externes peut atteindre environ 800 Vickers. La planéité d'une telle tôle est définie par une flèche inférieure à 3 mm/m.

L'invention va maintenant être décrite plus en détail.

Pour réaliser les tôles plaquées tricouches selon l'invention on plaque par des moyens connus en eux-mêmes trois couches d'acier :
- une couche centrale composée d'un acier faiblement allié classique tel qu'un acier au carbonemanganèse ayant une teneur pondérale en carbone inférieure à 0,25 % et un carbone équivalent inférieur à O,5 %,
- deux couches externes composées d'un acier contenant au moins 0,3 % de carbone et au moins 1 % d'éléments carburigènes, puis on réalise une trempe de cette tôle plaquée de façon telle que :
- le refroidissement soit très rapide dans le domaine de formation des constituants ferritiques doux ($\theta \geq$ 450°C) ou même jusqu'au point $M_s$ des couches externes,
- le refroidissement soit plus lent une fois la transformation martensitique amorcée.

Cette vitesse de refroidissement lente, conjointement à la présence d'éléments carburigènes permet la formation d'une structure martensitique accompagnée d'une fine précipitation de carbures simultanément à la transformation progressive d'austénite en martensite.

Cette fine précipitation de carbure à un double avantage :
- à dureté égale, elle augmente la résistance à l'abrasion ; ce phénomène a déjà été décrit,
- à résistance à l'abrasion égale, elle appauvrit en carbone la matrice martensitique ce qui diminue la dilatation engendrée par la transformation martensitique et ainsi, diminue les déformations au cours de la trempe.

D'autre part, la vitesse de refroidissement ralentie du métal dans le domaine de transformation martensitique offre d'autres avantages pratiques pour l'utilisation :

1) elle permet une meilleure relaxation des contraintes générées par la transformation martensitique progressive,

2) elle accroît la teneur en austénite résiduelle d'où une réduction de la limite d'élasticité, ce qui participe également à abaisser le niveau de contraintes internes.

Il en résulte une contribution supplémentaire à la bonne planéité et à la stabilité de celle-ci lors des découpages des pièces dans les tôles.

Les éléments carburigènes peuvent être du chrome ou du molybène ; on utilise ainsi des aciers dont les teneurs en ces éléments sont de préférence telles que :

Cr + Mo > 1 %.

Mais celà n'empêche nullement de prévoir d'autres éléments d'alliage tels que Mn, Ni, B, etc... pour augmenter la trempabilité ou la ténacité et d'autres éléments susceptibles de former des carbures tels que V, Nb, Ti, ... .

Si l'épaisseur n'est pas trop élevée et les couches externes suffisamment trempantes pour assurer une autotrempe martensitique, la trempe peut simplement être faite à l'air. En effet, en épaisseur mince, une trempe à l'air conduit à un refroidissement rapide à haute température et à un refroidissement beaucoup plus lent à basse température.

De manière générale, on préfère à la trempe à l'air une trempe à l'huile qui elle aussi conduit à un refroidissaient rapide à haute température et à un refroidissement beaucoup plus lent à basse température mais permet de réduire le recours aux éléments d'alliage trempants coûteux et d'accéder aux épaisseurs d'intérêt pratique (e > 5 mm).

Avantageusement, cette trempe à l'huile est faite dans une machine de trempe sous presse, ce qui améliore la planéité.

On obtient ainsi des tôles plaquées tricouches dont la planéité correspond à des flèches inférieures à 3 mm/m, ce qui est très satisfaisant pour réaliser des pièces tolérancées.

On a constaté qu'une trempe à l'eau, même suivie d'un revenu ne permettait pas d'obtenir de tels résultats. En effet, la trempe à l'eau conduit à un refroidissement très rapide aussi bien à haute qu'à basse température ; la précipitation différée de carbures, éventuellement obtenue au cours du revenu à température relativement élevée, se révèle, de façon inattendue, moins efficace en terme de résistance à l'abrasion.

Par ailleurs, la planéité reste très mauvaise.

Enfin, l'absence de la faible teneur en austénite résiduelle après trempe à l'eau suivie ou non de revenu prive des avantages décrits liés à la présence d'austénite résiduelle.

A titre d'exemple non limitatif, on a réalisé par trempe à l'huile sous presse des tôles dont la couche centrale avait la composition suivante :

C = 0,2 %
Si = O,25 %
Mn = 1,1 %

la composition chimique des couches externes était :

C = 0,7 %
Si = 0,25 %
Mn = 0,7 %
Ni = 1,3 %
Cr = 1,1 %
Mo = 0,07 %.

La couche externe avait une dureté d'environ 800 Vickers et une structure martensitique avec de fins précipités de carbures de chrome et de molybdène, d'où une excellente tenue à l'abrasion.

La planéité de ces tôles était caractérisée par une flèche inférieure à 3 mm/m, d'où une bonne aptitude à réaliser des pièces tolérancées.

Enfin, la couche interne étant peu chargée en carbone et en éléments d'alliage, après "délardage", c'est-à-dire après enlèvement des couches de placage dans la zone de soudage, ces tôles sont facilement soudables.

Pour réaliser des pièces à l'aide de ces tôles, on découpe les pièces soit au chalumeau à gaz, soit au chalumeau à plasma, soit au laser. Le découpage au laser a l'avantage de ne pas adoucir les couches dures au voisinage de la ligne de coupe.

**Revendications**

1. Procédé de réalisation de tôles plaquées tricouches ayant une haute résistance à l'usure et une bonne planéité utilisées notamment pour fabriquer des pièces tolérancées, caractérisé en ce que :
   - on réalise par placage de tôles superposées une tôle composite tricouche dont la couche centrale est constituée d'un acier faiblement allié ayant une teneur pondérale en carbone inférieure à 0,25 % et un carbone équivalent inférieur à 0,5 % et dont les couches externes sont constituées d'un acier contenant au moins 0,3 % de carbone et au moins 1 % d'éléments carburigènes,
   - on effectue une trempe telle que le refroidissement soit très rapide au-dessus du point $M_s$ des couches externes et beaucoup plus lent ensuite.

2. Procédé suivant la revendication 1, caractérisé par le fait que la teneur en carbone de l'acier de la couche centrale est inférieure à 0,15 % et le carbone équivalent inférieur à 0,25 %.

3. Procédé selon l'une quelconque des revendications 1 et 2, caractérisé en ce que les éléments carburigènes dans les couches externes sont principalement constituées par du chrome et du molybdène et que la teneur totale en chrome et en molybdène est supérieure à 1 %.

4. Procédé selon l'une quelconque des revendications 1, 2 et 3, caractérisé en ce que la trempe est une trempe à l'air.

5. Procédé selon l'une quelconque des revendications 1, 2 et 3, caractérisé en ce que la trempe est une trempe à l'huile.

6. Procédé selon la revendication 5, caractérisé en ce que la trempe est faite dans une machine de trempe sous presse.

7. Tôle plaquée tricouche réalisée à l'aide du procédé selon l'une quelconque des revendications 1 à 6 caractérisée en ce que la structure des couches externes est de la martensite avec une fine précipitation de carbures.

8. Tôle plaquée selon la revendication 7, caractérisée par le fait que la dureté Brinell des couches externes est supérieure à 450 HB et de préférence à 600 HB.

9. Tôle plaquée selon la revendication 7, caractérisée en ce que la dureté des couches externes est d'environ 800 Vickers.

10. Tôle plaquée selon l'une quelconque des revendications 7, 8 et 9, caractérisée en ce que sa planéité est définie par une flèche inférieure à 3 mm/m.

**Claims**

1. Method for manufacturing triple-layer clad sheet steel having high resistance to wear and a good degree of planeness, used notably for manufacturing toleranced parts, characterised in that:
   - by positioning steel sheets on top of each other, a triple-layer composite sheet is produced, the middle layer of which consists of a lightly alloyed steel having, by weight, a carbon content of less than 0.25% and an equivalent carbon of less than 0.5% and the outer layers of which consist of a steel containing at least 0.3% carbon and at least 1% carbide-generating substances,
   - quench hardening is carried out such that the cooling is very rapid above the $M_S$ point of the outer layers and much slower thereafter.

2. Method according to Claim 1, characterised by the fact that the carbon content of the steel in the middle layer is less than 0.15% and the equivalent carbon less than 0.25%.

3. Method according to either one of Claims 1 and 2, characterised in that the carbide-generating substances in the outer layers principally consist of chromium and molybdenum and in that the total chromium and molybdenum content is greater than 1%.

4. Method according to any one of Claims 1, 2 and 3, characterised in that the quench hardening is quench hardening in air.

5. Method according to any one of Claims 1, 2 and 3, characterised in that the quench hardening is quench hardening in oil.

6. Method according to Claim 5, characterised in that the quench hardening is carried out in a quench hardening machine under a press.

7. Triple-layer clad sheet steel produced by means of the method according to any one of Claims 1 to 6, characterised in that the structure of the outer layers is martensite with a fine precipitation of carbides.

8. Clad sheet steel according to Claim 7, characterised by the fact that the Brinell hardness of the outer layers is greater than 450 BH and preferably greater than 600 BH.

9. Clad sheet steel according to Claim 7, characterised in that the hardness of the outer layers is approximately 800 Vickers.

10. Clad sheet steel according to any one of Claims 7, 8 and 9, characterised in that its planeness is defined by a deflection of less than 3 mm/m.

**Patentansprüche**

1. Verfahren zur Herstellung von dreischichtigen plattierten Blechen mit hoher Verschleißfestigkeit und guter Ebenheit, die insbesondere zur Herstellung von Werkstücken mit festgelegten Toleranzen verwendet werden, dadurch gekennzeichnet, daß
   - man durch Plattieren von übereinandergelegten Blechen ein dreischichtiges Verbundblech herstellt, dessen Mittelschicht aus einem schwach legierten Stahl mit einem gewichtsmäßigen Gehalt an Kohlenstoff von weniger als 0,25 % und einem äquivalenten Kohlenstoff von weniger als 0,5 % besteht und dessen Außenschichten aus einem Stahl bestehen, der mindestens 0,3 % Kohlenstoff und mindestens 1 % Kohlenstoff bildende Elemente enthält,

- man eine solche Härtung durchführt, daß die Kühlung oberhalb des Ms-Punktes der Außenschichten sehr schnell und anschließend viel langsamer ist.

2. Verfahren nach Anspruch 1, dadurch gekennzeichnet, daß der Gehalt des Stahls der Mittelschicht an Kohlenstoff kleiner als 0,15 % und der äquivalente Kohlenstoff kleiner als 0,25 % ist.

3. Verfahren nach einem der Ansprüche 1 und 2, dadurch gekennzeichnet, daß die Kohlenstoff bildenden Elemente in den Außenschichten hauptsächlich aus Chrom und Molybdän bestehen und daß der Gesamtgehalt an Chrom und Molybdän größer als 1 % ist.

4. Verfahren nach einem der Ansprüche 1, 2 und 3, dadurch gekennzeichnet, daß die Härtung eine Lufthärtung ist.

5. Verfahren nach einem der Ansprüche 1, 2 und 3, dadurch gekennzeichnet, daß die Härtung eine Ölhärtung ist.

6. Verfahren nach Anspruch 5, dadurch gekennzeichnet, daß die Härtung in einer Maschine zur Härtung unter Presse vorgenommen wird.

7. Dreischichtiges plattiertes Blech, das mit Hilfe des Verfahrens nach einem der Ansprüche 1 bis 6 hergestellt ist, dadurch gekennzeichnet, daß die Struktur der Außenschichten Martensit mit einer feinen Ausfällung von Kohlenstoffen ist.

8. Plattiertes Blech nach Anspruch 7, dadurch gekennzeichnet, daß die Brinellhärte der Außenschichten größer als 450 HB und vorzugsweise 600 HB ist.

9. Plattiertes Blech nach Anspruch 7, dadurch gekennzeichnet, daß die Härte der Außenschichten etwa 800 Vickers beträgt.

10. Plattiertes Blech nach einem der Ansprüche 7, 8 und 9, dadurch gekennzeichnet, daß seine Ebenheit durch eine Durchbiegung von weniger als 3 mm/m definiert ist.